# EUROPEAN PATENT SPECIFICATION

(11) **EP 1 067 086 B1**
(45) Date of publication and mention of the grant of the patent: **14.02.2007**
(21) Application number: 00114540.8
(22) Date of filing: 06.07.2000
(51) Int. Cl.: B66F 9/075, B60N 2/28, B60K 1/04

(54) **Seat support for industrial vehicles**
Sitzgestell für Industriefahrzeuge
Support de siège pour véhicules industriels

(30) Priority: 07.07.1999 JP 19304799; 20.08.1999 JP 23462499
(43) Date of publication of application: 10.01.2001
(73) Proprietor: KABUSHIKI KAISHA TOYOTA JIDOSHOKKI, Kariya-shi, Aichi-ken (JP)
(72) Inventor: Kikukawa, Keiichi, c/o K.K.T.Jidoshokki Seisakusho, Kariya-shi, Aichi-ken (JP); Kawabata, Nobuaki, c/o K.K.T.Jidoshokki Seisakusho, Kariya-shi, Aichi-ken (JP); Amamiya, Yoshiyuki, c/oK.K.T.Jidoshokki Seisakusho, Kariya-shi, Aichi-ken (JP)
(74) Representative: TBK-Patent

(56) References cited:
- EP-A- 0 589 188
- EP-A- 0 885 836
- DE-A- 4 219 786
- US-A- 4 312 418
- US-A- 5 228 531
- PATENT ABSTRACTS OF JAPAN vol. 1998, no. 08, 30 June 1998 (1998-06-30) -& JP 10 076854 A (TOYOTA AUTOM LOOM WORKS LTD), 24 March 1998 (1998-03-24)

## Description

### BACKGROUND OF THE INVENTION

The present invention relates to industrial vehicles such as forklifts and shovel loaders, and more particularly, to a seat support for industrial vehicles.

In recent years, electric motors that are powered by batteries have been employed in compact forklifts. In the past, engines were more commonly used in forklifts.

Typically, an implement, which includes masts, forks, lift cylinders, and tilt cylinders, is located on the front of an industrial vehicle. Accordingly, balance weights, a motor for driving the wheels, a motor for motor hydraulic circuit, a hydraulic pump, a battery and the like must be arranged to balance the weight of the front of the vehicle at the rear of the vehicle. Therefore, it is difficult to provide space for accommodating these components.

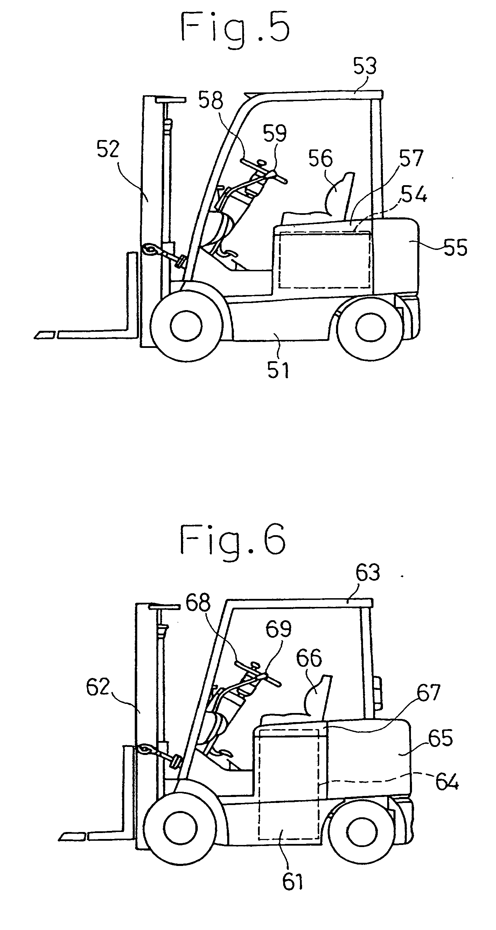

As shown in Fig. 5, in a battery-type counter balance forklift, an implement 52, which includes forks, masts, lift cylinders, and tilt cylinders, is located on the front of the forklift, and a balance weight, which is covered by a cowl, is located on the rear of the forklift. A battery chamber 54 is located in a driver's compartment, which is beneath a head guard 53 and is located above the floor of a chassis 51. A motor is located on the chassis 51 below the battery chamber 54. The upper opening of the battery chamber 54 is covered with a cover 57, on which a driver's seat 56 is attached. The cover 57 is opened when checking or replacing the battery in the battery chamber 54, and the seat moves together with the cover 57 when the cover 57 is opened.

However, the space in the driver's compartment is reduced by the battery chamber 54. In particular, the spaces between a steering wheel 58 and the seat 56 and between levers 59 and the seat 56 are narrow, which reduces the space for the driver' legs. This makes the operation of the forklift uncomfortable.

Fig. 6 shows another counter balance forklift. An implement 62, which includes forks, masts, lift cylinders, and tilt cylinders, is located in the front of the forklift. A balance weight, which is covered with a cowling 65, is located in the rear of the forklift. A battery chamber 64 is located in the driver's compartment beneath a head guard 63. However, the battery chamber 64 extends into a chassis 61 through the floor, which permits a larger battery to be carried. Driving parts, such as a motor, are located rearward of the battery chamber 64. A cover 67 is opened when checking or replacing the battery, and the seat moves together with the cover 67 when the cover 67 is opened.

Though the forklift of Fig. 6 can carry a larger battery, the spaces between the seat 66 and a steering wheel 68 and between the seat 66 and levers 69 are still narrow, which makes the operation of the forklift uncomfortable. Also, a transmission mechanism extends through the narrow space below the chassis 61, which complicates the assembly of the forklift.

It has been proposed to locate the battery below the floor of the driver's compartment to increase the space above the floor. When the battery or an engine is located below the floor, it is necessary to improve the structure of the cover so that the battery or the engine can be easily checked and replaced. Further, the seat must be located on the floor such that the driver can comfortably operate the forklift.

Document JP-A-10076854 discloses a mounting structure of a heat generation part which comprises a ventilation hole formed at substantially the centre of a bottom face of a battery storage chamber, wherein the battery storage chamber is opened downward through the ventilation hole. A mounting base seat is attached on an inner side of the ventilation hole and covers the whole ventilation hole. A transformer for charging as a heat generation part is attached on a top face of the mounting base seat.

### SUMMARY OF THE INVENTION

An objective of the present invention is to provide an industrial vehicle that increases the space in the driver's compartment and makes the operation of the vehicle comfortable.

To achieve the above objective, the present invention provides an industrial vehicle structured as follows. The industrial vehicle includes an implement located at the front of a vehicle, an object mounted on the vehicle, an operator compartment located in the center of the vehicle, an accommodation space housing the object and located below a floor of the operator compartment, an opening in the floor above the accommodation space, and a removable cover covering the opening. The industrial vehicle is characterized in that a seat is located on the cover, the lower part of the cover covers the accommodation space, a recess formed beneath the seat to increase the space in the compartment, wherein the recess opens in a frontward direction, and the cover is located above the floor and pivots rearward to uncover the opening.

Other aspects and advantages of the present invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention, together with objects and advantages thereof, may best be understood by reference to the following description of the presently preferred embodiments together with the accompanying drawings in which:
Fig. 1 is a battery-type forklift according a first embodiment of the present invention;
Fig. 2 is a perspective view showing the structure of the cover of Fig. 1;
Fig. 3 is an exploded perspective view showing another structure of a cover;
Fig. 4 is a perspective view showing another structure of a cover;
Fig. 5 is a side view of a prior art forklift; and
Fig. 6 is a side view of another prior art forklift.

### DETAILED DESCRIPTION OF THE PREFERRED EMBODIMENTS

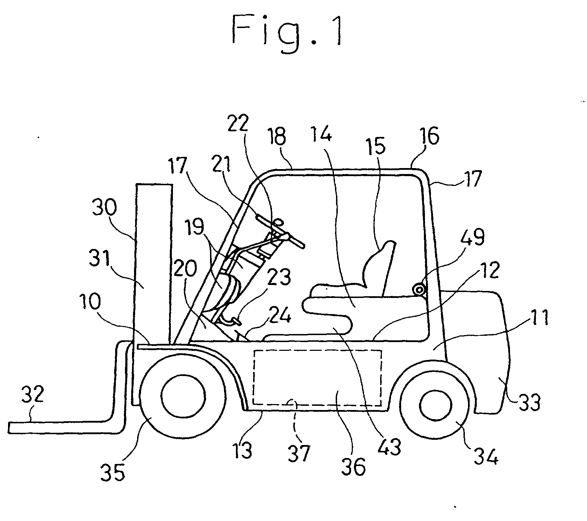

Fig. 1 shows a battery-type counter balance forklift according to one embodiment of the present invention. The forklift includes a body at its center. Masts are located at the front of the forklift, and a balance weight is located in the rear of the body. The body also carries a drive mechanism and hydraulic devices.

The body further includes a chassis 10 and a head guard 16. The chassis 10 is made by welding various parts. For example, the chassis 10 includes two parallel side members 11 and cross members that are attached to the front and rear ends of the side members. The upper surface of the chassis 10 is covered with a floor panel 12, and the lower surface is covered with an under panel 13. The floor panel has an opening providing access to the inside of the chassis 10. A cover 14 closes the opening. An operator's seat 15 is fixed to the cover 14. The head guard 16 is installed on the chassis 10 and forms an operator's compartment. The head guard 16 includes four columns 17 and a ceiling 18. A panel is fixed to the front columns 17.

A steering wheel 21 and lift and tilt levers 22 are connected to a box 19, which is attached to an upper part of the front panel. An accelerator pedal 23 is connected to a box 20, which is attached to a lower part of the front panel. A brake pedal 24 is connected to the floor panel 12.

A mast assembly 30 includes an outer mast 31 and an inner mast (not shown). The outer masts 31 are located on the sides of the front part of the chassis 10. The inner masts connect the upper and lower portions of the outer masts 31. The lower end of the mast assembly 30 is supported by the chassis to tilt. A tilt cylinder is located between the mast assembly 30 and the chassis 10. A rod of the tilt cylinder is coupled to the mast assembly 30 and a housing is coupled to the chassis 10. A fork 32 is attached to the mast assembly 30 to move up and down. A lift cylinder is located between the outer masts 31. The housing of the lift cylinder is supported by the mast assembly 30, and the rod is coupled to a bracket located between the outer masts 31. A lift chain is received by a chain wheel, which is attached to the bracket. One end of the lift chain is connected to the fork 32 and the other end is connected to lower portions of the masts 30. When the lift cylinder is operated, the bracket moves up or down, which moves the lift chain and the fork 32. When the tilt cylinder is operated, the fork 32 and the mast assembly 30 are integrally tilted about the lower end of the mast assembly 30. A balance weight, a hydraulic pump, hydraulic motors, wheels, and a speed reducer are located beneath a cowling 33, which is attached to the chassis 10.

A rear wheel 34 is supported at the rear of the chassis 10. The rear wheel is steered by a hydraulic cylinder. The steering cylinder is connected by pipes to a unit box 19, which includes a circuit shift valve and a hydraulic cylinder. When the steering wheel 21 is rotated, the unit box 19 changes the direction of oil pressurization, which retracts or extends the cylinder rod and pivots the rear wheel 34 accordingly.

Two front wheels 35 are located on the sides of the front part of the chassis 10 and are supported by the chassis 10. The front wheels 35 are driven by an electric motor located inside the cowling 33. The drive shaft of the electric motor is connected to a drive shaft, which is connected to the speed reducer. The drive shaft is connected to a differential gear of the front axle. The electric motor is controlled by the accelerator pedal 23, which activates a controller in the box 20.

In this forklift, the battery, which is large and heavy, is accommodated in the chassis 10 below the floor panel 12. This increases the space available for the operator's compartment and lowers the center of gravity, which makes the forklift more stable. Though the battery is located below the floor panel 12, the battery can easily be accessed for maintenance.
The battery is shown by reference number 36 in Fig. 1. The battery 36 supplies electricity to a motor that drives the hydraulic pump. The hydraulic pump sends pressurized oil to hydraulic devices such as a motor for driving the front wheels 35, the lift cylinder, the tilt cylinders, and the steering cylinder. The battery 36 is accommodated in a battery chamber 37, which is formed by side members 11, cross members (not shown), the floor panel 12, and the under panel 13, which is located between the front and rear wheels 34, 35. The battery chamber 37 is accessible through the opening in the floor panel 12. The opening is closed by the cover 14.

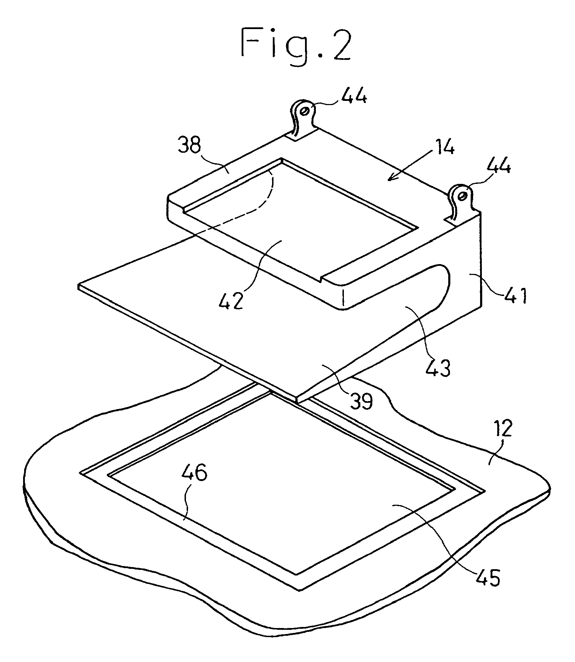

As shown in Fig. 2, the cover 14 includes a seat holder 38, a leg 39, and a support 41. A recess 43 is formed on the top surface of the seat holder 38. The seat 15 is fitted in the recess 42. The leg 39 is substantially parallel to the seat holder 38. The bottom of the leg 39 is flat. The support 41 is integrally formed on the rear of the seat holder 38 and the leg 39. A curved recess 43 is defined by the seat holder 38, the leg 39, and the support 41, which are molded using resin, for example. The resin cover 14 can be formed by injection molding or blow molding, which reduces manufacturing costs. Metal lugs 44, which form part of a hinge for the cover 14, are insert-molded in the seat holder 38.

The floor panel 12 has an opening 45 corresponding to the battery chamber 37. A shaft 49 is attached to the columns 17 of the head guard 16. The lugs 44 are engaged with the shaft 49 to form the hinge. The opening of the curved recess 43 faces frontward, and the bottom of the leg 39 is placed on a flange 46. The cover 14 is fastened to the flange 46 by bolts. The leg 39 and the floor panel form a flat floor.

The space in front of the seat 15 is relatively large, that is, the dimensions between the seat 15 and operation tools such as the steering wheel 21, the levers 22, the accelerator pedal 23, and the brake pedal 24 are relatively large. Therefore, the operator can easily get in the operator's compartment.

When the operator has to carry a tool box, the tool box can be placed in the curved recess 43 under the cover 14. Therefore, the operator can operate the forklift without interference.

Further, the heavy battery is located in the chassis 10 between the rear wheel 34 and the front wheels 35, which lowers the center of gravity of the forklift and increases the stability of the forklift.

When checking or replacing the battery 36, the bolts are unscrewed, and the cover 14 is pivoted about the shaft 49, clockwise in Fig. 1. When the cover 14 is opened, the upper surface of the battery 36 is completely exposed, which facilitates maintenance.

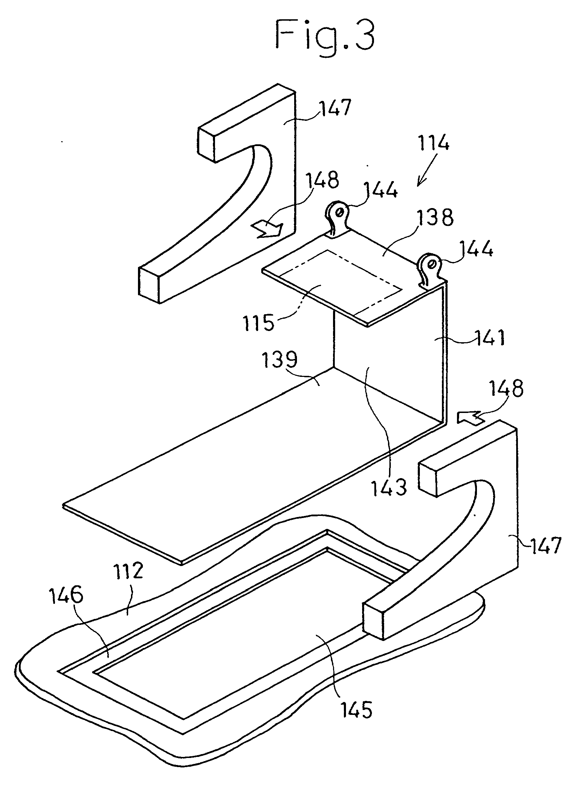

Fig. 3 shows a fork lift according to another embodiment of the present invention. The structure of the cover and the floor is different from that of the forklift of Figs. 1 and 2.

A cover 114 is formed by welding. The cover 114 includes a body, which is formed by a seat holder 138, a support 141, a leg 139, and side members 147, which are located on the sides of the body. The seat holder 138, the support 141 and the leg 139 are made of a flat plate. The seat holder 138 is parallel to the leg 139, and the support 141 is joined to the rear ends of the seat holder 138 and the leg 139. Lugs 144 are fixed to both sides of the rear part of the seat holder 138. The side members 147 are generally C-shaped. The seat holder 138, the support 141, and the leg 139 are located between the side members 147 and are joined to the inner sides of the side members 147.

The body 138, 139, 141 is formed by bending a metal or resin plate. The side members 147 are formed by molded resin or by metal plates. The side members 147 are attached to the body 138, 139, 141 as shown by the arrows 148 of Fig. 3. A seat 115 is fixed to the top surface of the seat holder 138.

An opening 145 is formed in a floor panel 112. The opening extends to the vicinity of the box 19. A flange 146 is located around the opening 145 and is fixed to the floor panel 112. The leg 139 of the cover 114 rests on the flange 146 and covers the opening 145.

The cover 114 is attached to the body 138, 139, 141 in the same manner as the cover 14 of Fig. 2.

Like the cover 14 of Fig. 2, the cover 114 of Fig 3 also creates a relatively large space in front of the operator's seat, which makes the operation of the forklift more comfortable. The advantages of the embodiment of Fig. 2 are the same as those of the first embodiment.

As described in the above embodiments, the space in the operator compartment is increased, which makes the operation of the forklifts more comfortable. Especially, the recesses 43, 143 serve as steps that is used when the operator gets in the vehicle.
Since the cover 14, 114 covers the opening 45, 145 and pivots to open, maintenance of an object accommodated in the space 37 is easy.

Further, the cover 14, 114 is structured as a single element that includes the seat holder 38, 138, the legs 39, 139, the supports 41, 141, which facilitates assembly of the vehicle.

Still further, the cover 14, 114 covers the space 37 and serves as part of the floor of the operator compartment at one time, which reduces the number of parts and the manufacturing costs.

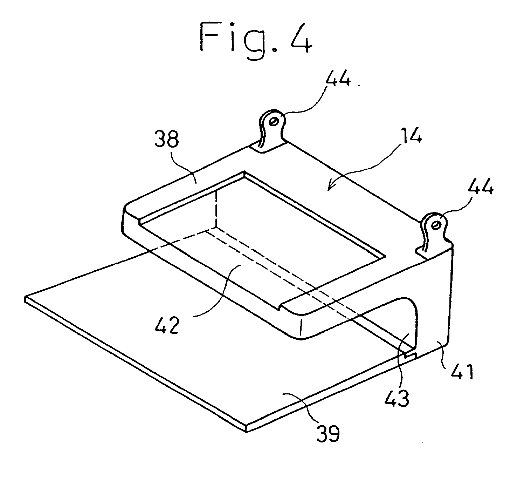

As shown in Fig. 4, the support 41 may be an independent part from the leg 39 and is joined to the leg 39. In this case, the leg 39 is retained to extend horizontally and covers the battery chamber 37. When the cover 14 is opened, the seat holder 38 and the support pivot on the lugs 44. Then, the leg 39 is pivoted, which reduces power required to open and close the cover 14.

The present invention can further be embodied in other industrial vehicle instead of forklifts. For example, the battery chamber 37 of Fig. 1 can be used to accommodate other objects. In these cases also, the advantage of the present invention are obtained.

It should be apparent to those skilled in the art that the present invention may be embodied in many other specific forms without departing from the scope of the invention. Therefore, the present examples and embodiments are to be considered as illustrative and not restrictive and the invention is not to be limited to the details given herein, but may be modified within the scope of the appended claims.
An industrial vehicle. An implement such as fork and a mast assembly (30, 31, 32) is located at the front of the vehicle body (11, 16), and a balance weight (33) for balancing the weight of the implement is located at the rear of the vehicle body. An operator compartment is located in the center of the vehicle. A space (37) for accommodating a battery or an engine is located below the floor of the compartment. The space (37) is covered by a removable cover (14, 114). A seat (15, 115) is located on the cover (14, 114). The cover covers the space (37). A recess (43, 143) is formed in the cover to increase the space of the compartment. The cover is located above the floor of the compartment and pivots to provide access to the space (37).

## Claims

1. An industrial vehicle comprising an implement (30, 31, 32) located at the front of the vehicle, an object (36) mounted on the vehicle, an operator compartment located in the centre of the vehicle, an accommodation space (37) housing the object and located vertically below a floor of the operator compartment, an opening (45) in the floor above the accommodation space, and a removable cover (14, 114) covering the opening, the industrial vehicle being **characterized in that** a seat (15, 115) is located on the cover (14, 114), the lower part of the cover covers the accommodation space (37), a recess (43, 143) is formed in the cover (14, 114) beneath the seat to increase the space in the compartment, wherein the recess opens in a frontward direction, and the cover is located above the floor and pivots rearward to uncover the opening (45).

2. The industrial vehicle according to claim 1 **characterized in that** the cover (14, 114) includes a single element, wherein the element includes a seat holder (38, 138), on which the seat (15, 115) is located, a leg (39, 139), which covers the accommodation space (37), and a support (41, 141), which defines the recess (43, 143).

3. The industrial vehicle according to claim 1 **characterized in that** the cover (14, 114) includes a body and side members, wherein the body includes a seat holder (138) and a leg (139), which are parallel, and a support (141), which is located between the seat holder and the leg, wherein the body is formed by bending a plate, and each side member includes a notch shaped to correspond to the recess (143), wherein the side members are joined to the sides of the body.

4. The industrial vehicle according to claim 2 or 3 **characterized in that** the leg (39, 139) of the cover (114) extends frontward from the bottom of the seat (15), wherein the leg covers the opening (45) and serves as part of the floor of the operator compartment.

5. The industrial vehicle according to claim 2 **characterized in that** the leg (39, 139) is an independent part from the support (41, 141) of the cover (14, 114) and is joined to the support (41, 141).

## Patentansprüche

1. Industriefahrzeug mit einem Arbeitsgerät (30, 31, 32), welches an der Vorderseite des Fahrzeugs platziert ist, einem Objekt (36), welches an dem Fahrzeug montiert ist, ein Abteil für die Bedienperson, welches in der Mitte des Fahrzeugs platziert ist, einem Unterbringungsraum (37), welcher das Objekt beherbergt und vertikal unterhalb eines Bodens des Abteils für den Maschinenbediener platziert ist, einer Öffnung (45) in dem Boden über dem Unterbringungsraum und einer entfernbaren Abdeckung (14, 114), welche die Öffnung abdeckt, wobei das Industriefahrzeug
**dadurch gekennzeichnet ist, dass**
ein Sitz (15, 115) auf der Abdeckung (14, 114) platziert ist, der untere Teil der Abdeckung den Unterbringungsraum (37) abdeckt, eine Aussparung (43, 143) in der Abdeckung (14, 114) unterhalb des Sitzes ausgebildet ist, um den Raum in dem Abteil zu vergrößern, wobei sich die Aussparung in eine vordere Richtung öffnet, und die Abdeckung über dem Boden platziert ist und nach hinten schwenkt zum Freilegen der Öffnung (45).

2. Industriefahrzeug nach Anspruch 1,
**dadurch gekennzeichnet, dass**
die Abdeckung (14, 114) ein einzelnes Element, wobei das Element einen Sitzhalter (38, 138) aufweist, auf welchem der Sitz (15, 115) platziert ist, einen Fuß (39, 139), welcher den Unterbringungsraum (37) abdeckt, und eine Abstützung (41, 141) aufweist, welche die Aussparung (43, 143) definiert.

3. Industriefahrzeug nach Anspruch 1,
**dadurch gekennzeichnet, dass**
die Abdeckung (14, 114) einen Körper und Seitenelemente aufweist, wobei der Körper einen Sitzhalter (138) und einen Fuß (139), welche parallel sind und eine Abstützung (141) aufweist, welche zwischen dem Sitzhalter und dem Fuß platziert ist, wobei der Körper durch Biegen einer Platte ausgebildet ist, und jedes Seitenelement eine Kerbe aufweist, welche ausgebildet ist, um mit der Aussparung (143) zu korrespondieren, wobei die Seitenelemente mit den Seiten des Körpers verbunden sind.

4. Industriefahrzeug nach Anspruch 2 oder 3,
**dadurch gekennzeichnet, dass**
sich der Fuß (39, 139) der Abdeckung (114) vom Boden des Sitzes (15) nach vorne erstreckt, wobei der Fuß die Öffnung (45) abdeckt und als Teil des Bodens des Abteils der Bedienperson dient.

5. Industriefahrzeug nach Anspruch 2,
**dadurch gekennzeichnet, dass**
der Fuß (39, 139) ein unabhängiges Teil von der Abstützung (41, 141) der Abdeckung (14, 114) ist und mit der Abstützung (41, 141) verbunden ist.

## Revendications

1. Véhicule industriel comprenant un équipement (30, 31, 32) situé à l'avant du véhicule, un objet (36) monté sur le véhicule, un compartiment de l'opérateur situé au centre du véhicule, un espace de logement (37) recevant l'objet et situé verticalement en dessous d'un plancher du compartiment de l'opérateur, une ouverture (45) dans le plancher au-dessus de l'espace de logement, et un cache amovible (14, 114) recouvrant l'ouverture, le véhicule industriel étant **caractérisé en ce qu'**un siège (15, 115) est situé sur le cache (14, 114), la partie inférieure du cache recouvre l'espace de logement (37), un évidement (43, 143) est formé dans le cache (14, 114) en dessous du siège pour augmenter l'espace disponible dans le compartiment, dans lequel l'évidement s'ouvre vers l'avant, et le cache est situé au-dessus du plancher et pivote vers l'arrière pour libérer l'ouverture (45).

2. Véhicule industriel selon la revendication 1, **caractérisé en ce que** le cache (14, 114) comporte un élément unique, dans lequel l'élément comporte un support de siège (38, 138) sur lequel le siège (15, 115) est situé, un berceau (39, 139) qui recouvre l'espace de logement (37) et un support (41, 141) qui définit l'évidement (43, 143).

3. Véhicule industriel selon la revendication 1, **caractérisé en ce que** le cache (14, 114) comporte un corps et des éléments latéraux, dans lequel le corps comporte un support de siège (138) et un berceau (139), qui sont parallèles, et un support (141) qui est situé entre le support de siège et le berceau, dans lequel le corps est formé en repliant une plaque, et chaque élément latéral comporte une encoche conçue de manière à correspondre avec l'évidement (143), dans lequel les éléments latéraux sont reliés aux côtés du corps.

4. Véhicule industriel selon la revendication 2 ou 3, **caractérisé en ce que** le berceau (39, 139) du cache (114) s'étend vers l'avant à partir de la partie inférieure du siège (15), dans lequel le berceau recouvre l'ouverture (45) et sert de partie de plancher du compartiment de l'opérateur.

5. Véhicule industriel selon la revendication 2, **caractérisé en ce que** le berceau (39, 139) est une partie indépendante du support (41, 141) du cache (14, 114) et est relié au support (41, 141).
